# EUROPEAN PATENT SPECIFICATION

(11) **EP 1 728 029 B1**
(45) Date of publication and mention of the grant of the patent: **02.12.2009**
(21) Application number: 05722192.1
(22) Date of filing: 10.03.2005
(51) Int. Cl.: F24F 13/28, F24F 13/06, B01D 46/02

(54) **A SUPPLY AIR DEVICE WITH A FILTER BAG INCLUDING AN INTERCONNECTION BETWEEN THE FILTER BAG AN A BRANCH CONNECTED TO THE SUPPLY AIR CONDUIT**
VERSORGUNGSLUFTVORRICHTUNG MIT EINEM FILTERBEUTEL MIT EINER VERBINDUNG ZWISCHEN DEM FILTERBEUTEL UND EINEM MIT DER VERSORGUNGSLUFTLEITUNG VERBUNDENEN ZWEIG
DISPOSITIF TERMINAL D'ALIMENTATION D'AIR POUR RESEAU DE CONDUITES DE VENTILATION

(30) Priority: 26.03.2004 SE 0400795
(43) Date of publication of application: 06.12.2006
(73) Proprietor: Andersson, Fredrik, S-171 59 Solna (SE)
(72) Inventor: Andersson, Fredrik, S-171 59 Solna (SE)
(74) Representative: Sundström, Per Olof
(86) International application number: PCT/SE2005/000344
(87) International publication number: WO 2005/093334

(56) References cited:
- WO-A1-96/24430
- US-A- 3 204 391
- US-A- 3 396 517
- US-A- 4 015 961
- PATENT ABSTRACTS OF JAPAN vol. 2002, no. 09 04 September 2002 & JP 2002 143621 A (DUSKIN CO LTD) 21 May 2002

## Description

The invention relates to a supply air terminal device for a ventilation duct network of the kind that is seen in the preamble of claim 1.

Thus, the invention relates to a supply air terminal device for a ventilation duct network, comprising a flexible bag of filter material, which with the neck thereof is releasably mounted on a pipe socket, which forms an end portion of a supply air pipe, which belongs to the ventilation duct network, and which mouths into the room. JP 2002 143 621 A shows a flexible filter bag releasably mounted on a pipe socket. The bags in question have to be exchanged after a certain operating period, since they eventually are clogged by sludge and other dust that are conveyed by the supply air up to the supply air terminal device.

In known supply air terminal devices of the kind in question, the flexible bag is mounted on the pipe socket by the bag neck thereof being threaded on the pipe socket, the outer diameter of which preferably closely corresponds to the inner diameter of the bag neck, after which the bag neck has to be fastened on the pipe socket, for instance by the fact that a hose clamp or the like is applied round the bag neck in order to closely clamp the same on the pipe socket. Such a bag mounting is usually carried out during operation of the ventilation duct network when a considerable force acts against the bag; the bag is manufactured in order to produce a pressure drop of the order of 100 Pa and the diameter of the bag neck may, for instance, be 20-30 cm or more. When the operator finally has succeeded in threading the bag neck on the pipe socket, he/she should retain the bag on the pipe socket in spite of the force that the supply air exerts against the bag, and simultaneously apply a hose clamp or the like for the lashing of the bag. Therefore, the bag exchange is relatively cumbersome and requires relatively long time. Furthermore, upon the bag exchange, during the period of time that the pipe socket lacks a filter bag, the supply air will freely flow in through the pipe socket into the room, and this means that said supply air flow may become considerably increased, which on one hand results in annoying ventilation disturbances in the room in question and in addition causes a substantial drop of the air flows through the other supply air terminal devices of the ventilation system. Since a ventilation duct network usually contains a great number of bags that should be exchanged, the disturbances for the users of the rooms become significant.

Therefore, an object of the invention is to provide a supply air terminal device, by means of which the problems mentioned entirely or partly can be obviated.

The object is attained by the invention.

The invention is defined in the appended claim 1.

Embodiments of the invention are defined in the appended dependent claims.

In the following, the invention will be described in more detail in connection with the accompanying drawing.
- Fig. 1: shows schematically a supply air terminal device according to the invention.
- Fig. 2: shows a variant of a supply air terminal device according to the invention.
- Fig. 3: shows a detail of a filter bag for the use in a supply air terminal device according to the invention.

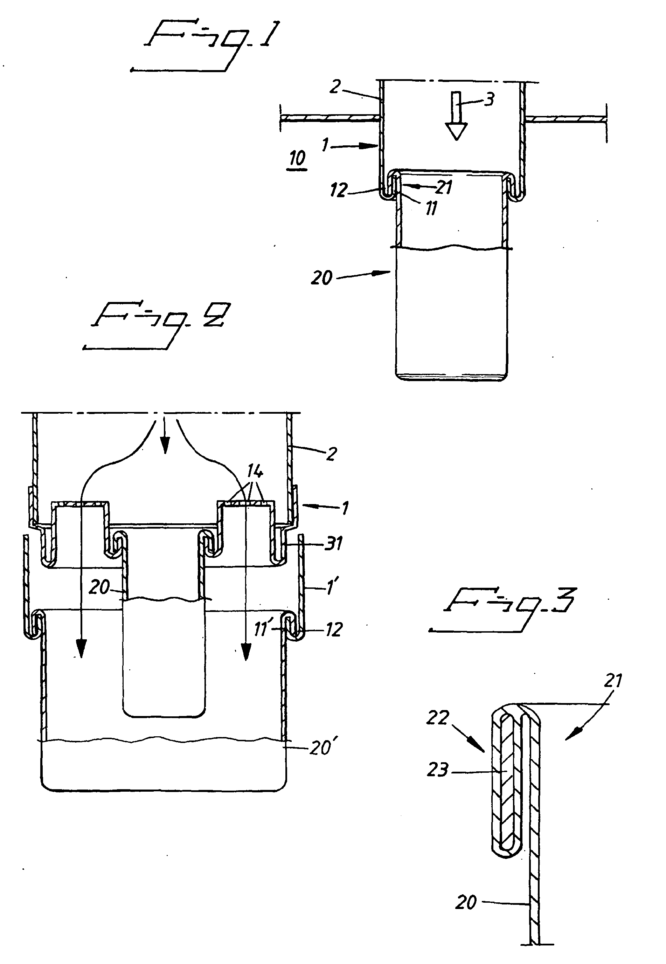

Fig. 1 illustrates a pipe socket 1, which constitutes an end part of a supply air pipe 2, which mouths into a room 10. A bag 20 of a flexible filter material is with the neck thereof closely connected around the circumference of the pipe socket 1. Supply air 3 flows in through the pipe socket 1, into the neck 21 of the bag and passes out through the walls of the bag 20. The material of the bag 20 is in a known way *per se* selected in order to afford a pressure drop of the order of 100 Pa to the supply air 3, so that the supply air 3 upstream the bag 20 can have an expedient overpressure of approx. 100 Pa in relation to the atmosphere, so that the supply air 3 can be distributed from a fan assembly via a pipe system, which branches into a plurality of pipes 2, which mouth in the respective rooms.

According to the invention, the neck 21 of the bag 20 has a around 180° outward reversed edge portion 22, which is stabilized by a resiliently elastic ring-shaped edge element 23, which has a circumference that is somewhat greater than the circumference of the bag neck 21. The ring-shaped resiliently elastic edge element 23 has a substantially circular memory shape, and tightens the neck of the bag against this circular shape.

In fig. 1 it can be seen that the pipe socket 1 has an inward around 180° bent over edge portion 11 for the formation of a recess 12, which is of a shape and size that corresponds to 5 for the bent over edge portion 22 of the bag in order to allow the same to be readily inserted therein and stably retained therein.

An operator can grip the bag 20 in the neck portion thereof by the hand and deform the same from the memory shape of the ring-shaped edge portion 23, and thread the neck part of the bag a distance into the socket 1 in the direction opposite to the supply air flow 3. When the bag neck is set free, the edge element 23 tends to raise the bag neck 21 to circular shape at the same time as the supply air flow 3 tends to blow up the bag 20 to a circular shape, so that the bag neck is barely widened, the flange part 22 of the bag being directed toward the recess 12. The bag 20 is axially driven by the supply air flow and/or by the fact that the operator pulls the bag 20 axially outward, so that the edge part 22 of the bag is received in the recess 12. The axial force exerted by the supply air flow 3 on the bag 20 during operation retains the bag 20 steadily in the recess 12. By the fact that the element 23 has a considerable flexural rigidity in the axial direction thereof, a retracting of the bag 20 out of the socket is prevented.

When the bag 20 is to be exchanged, an operator can grip the bag 20 around the circumference thereof and tie up the bag, in order to then insert the bag through the neck part thereof and further into the pipe socket 1 until the edge part 22 leaves the recess 12, after which the neck part of the bag can be deformed manually so that also the bag neck part can be taken out through the opening of the pipe socket 1 defined by the portion 11.

Fig. 1 illustrates that the pipe socket may be integrated in the supply air pipe 2. Fig. 2 shows that the pipe socket 1 may be in the shape of a separate element that is mounted onto the end of the pipe 2. Thus, the pipe socket 1 is shown to have a sleeve in order to be readily mounted on the end of the pipe 2. The second end of the pipe socket 1 is shown tubular and provided with an inward flanged edge part 11 for the formation of the recess 12, which receives the edge portion 22 of a first inner bag 20. The separate pipe socket 1 is shown to have a retracted waist portion 31 for the receipt of a first end portion of a second pipe socket 1', the second end portion of which has an edge part 11, which is flanged inward for the formation of a pocket 12 for the receipt of an outer edge portion 11' of a second bag 20', in which the bag 20 is shown received. In fig. 2, it can further be seen that the separate pipe socket 1 between the ends thereof may have perforations 14 for the direct transmission of supply air into the pipe socket 1'.

A supply air terminal device of the kind that is seen in fig. 2 should normally have an appurtenant valve element, which normally covers the perforations 14 and which is arranged to temporary uncover the perforations 14 in order to enable an increase of the air throughflow through the supply air terminal device, for instance for temporary enhanced ventilation of the room in question. Thus, the supply air terminal device according to fig. 2 is a two-stage supply air terminal device in respect of the air throughflow.

Fig. 2 illustrates pipe sockets that can be mounted on the end of a supply air pipe 2 in order to enable quick and simple exchange of filter bags having a neck design in correspondence with fig. 3.

## Claims

1. Supply air terminal device for a ventilation duct network, comprising a flexible bag (20) of filter material, which with the neck thereof is releasably mounted on a pipe socket (1), which forms an outlet end portion of a supply air pipe (2), which belongs to the ventilation duct network and which mouths into a room (10) that is to be supplied with air, **characterized in that** the neck (21) of the bag (20) has an edge part (22) flanged against the outside thereof, which edge part is stabilized by a resiliently elastic element of substantially circular pipe shape, that the edge part is received in a correspondingly shaped tubular pocket (12), which is arranged on the inside of the pipe socket (1) at the outlet end thereof and which is open in the upstream direction.

2. Supply air terminal device according to claim 1, **characterized in that** the pipe socket comprises a pipe element, which at one end thereof is provided with the pocket (12) and which with the second end thereof is connected to an outlet end of the supply air pipe (2).

3. Supply air terminal device according to claim 1 or 2, **characterized in that** an additional, second pipe socket (1') is provided and is generally concentrically connected to the first mentioned, first pipe socket (1), that the pipe socket (1') at the outlet end thereof on the inside thereof has a ring-shaped pocket of a diameter deviating from the pocket of the first pipe socket and that is open in the upstream direction and receives an edge part of a bag (20') fitting thereto and being flanged against the outside of the neck thereof, the flanged edge part of the bag (20') belonging to the second pipe socket (1') being stabilized by a resiliently elastic, substantially circular tubular element (23), which is received in the pocket (12) of the second pipe socket.

4. Supply air terminal device according to claim 3, **characterized in that** the second pipe socket (1') has greater diameter than the first pipe socket (1) and is in the form of a pipe section that at the upstream end thereof carries sealing members and is closely connected via the sealing members to the first pipe socket around the circumference thereof, the second pipe socket at the downstream end thereof having the pocket (12) for the flanged end part (11) of the appurtenant bag (20') thereof.

## Patentansprüche

1. Zuluftanschlussvorrichtung für ein Belüftungskanalnetz mit einem flexiblen Beutel (20) aus Filtermaterial, der mit seinem Hals lösbar an einem Rohrstutzen (1) montiert ist, der einen Ausfassendabschnitt eines Zuluftrohrs (2) bildet, das zu dem Belüftungskanalnetz gehört und das in einen Raum (10) mündet, der mit Luft versorgt werden soll, **dadurch gekennzeichnet, dass** der Hais (21) des Beutels (20) einen Kantenteil (22) aufweist, der an dessen Außenseite angeflanscht ist, wobei der Kantenteil durch ein federnd elastisches Element mit im Wesentlichen kreisförmiger Rohrform stabilisiert ist, dass der Kantenteil in einem entsprechend geformten röhrenförmigen Fach (12) aufgenommen ist, das an der Innenseite des Rohrstutzens (1) am Auslassende desselben angeordnet ist und das in der Stromaufwärtsrichtung offen ist.

2. Zuluftanschlussvorrichtung nach Anspruch 1, **dadurch gekennzeichnet, dass** der Rohrstutzen ein Rohrelement umfasst, das an einem Ende davon mit dem Fach (12) versehen ist und das mit dem zweiten Ende davon mit einem Auslassende des Zuluftrohrs (2) verbunden ist.

3. Zuluftanschlussvorrichtung nach Anspruch 1 oder 2, **dadurch gekennzeichnet, dass** ein zusätzlicher zweiter Rohrstutzen (1') vorgesehen ist und im Allgemeinen konzentrisch mit dem erstgenannten, ersten Rohrstutzen (1) verbunden ist, dass der Rohrstutzen (1') an seinem Auslassende an seiner Innenseite ein ringförmiges Fach mit einem Durchmesser aufweist, der vom Fach des ersten Rohrstutzens abweicht, und das in der Stromaufwärtsrichtung offen ist und einen Kantenteil eines Beutels (20') aufnimmt, der in dieses passt und an der Außenseite des Halses davon angeflanscht ist, wobei der angeflanschte Kantenteil des Beutels (20'), der zum zweiten Rohrstutzen (1') gehört, durch ein federnd elastisches, im Wesentlichen kreisförmiges röhrenförmiges Element (23) stabilisiert ist, das im Fach (12) des zweiten Rohrstutzens aufgenommen ist.

4. Zuluftanschlussvorrichtung nach Anspruch 3, **dadurch gekennzeichnet, dass** der zweite Rohrstutzen (1') einen größeren Durchmesser aufweist als der erste Rohrstutzen (1) und in Form eines Rohrabschnitts vorliegt, der an dessen stromaufseitigem Ende Dichtungselemente trägt und über die Dichtungselemente eng mit dem ersten Rohrstutzen um dessen Umfang verbunden ist, wobei der zweite Rohrstutzen an dessen stromabseitigem Ende das Fach (12) für den angeflanschten Endteil (11) des zugehörigen Beutels (20') davon aufweist.

## Revendications

1. Dispositif terminal d'alimentation en air d'un réseau de conduites de ventilation, comprenant un sac souple (20) d'un matériau de filtre, dont le col est monté de manière libérable sur un raccord de tuyau (1), qui forme une partie d'extrémité de sortie d'un tuyau d'alimentation en air (2), qui appartient au réseau de conduites de ventilation et qui débouche dans une pièce (10) qui doit être alimentée en air, **caractérisé en ce que** le col (21) du sac (20) présente une partie de bord (22) bridée contre l'extérieur de celui-ci, laquelle partie de bord est stabilisée par un élément élastique souple en forme de tuyau sensiblement circulaire, de telle sorte que la partie de bord soit reçue à l'intérieur d'une poche tubulaire de forme correspondante (12), qui est disposée sur l'intérieur du raccord de tuyau (1) au niveau de l'extrémité de sortie de celui-ci et qui est ouverte dans la direction vers l'amont.

2. Dispositif terminal d'alimentation en air selon la revendication 1, **caractérisé en ce que** le raccord de tuyau comprend un élément de tuyau qui est doté an niveau d'une extrémité de celui-ci de la poche (12) et qui, par la seconde extrémité de celui-ci, est relié à une extrémité de sortie du tuyau d'alimentation en air (2).

3. Dispositif terminal d'alimentation en air selon la revendication 1 ou la revendication 2, **caractérisé en ce qu'**un second raccord de tuyau supplémentaire (1') est fourni et est relié en général de manière concentrique an premier raccord de tuyau mentionné (1), **en ce que** !e raccord de tuyau (1') au niveau de l'extrémité de sortie de celui-ci sur l'intérieur de celui-ci dispose d'une poche de forme annulaire qui présente un diamètre qui dévie de la poche du premier raccord de tuyau et qui est ouvert dans la direction vers l'amont et reçoit une partie de bord d'un soc (20') qui s'ajuste à celui-ci et qui est bridée contre l'extérieur du col de celui-ci, la partie de bord bridée du sac (20') appartenant au second raccord de tuyau (1') stabilisé par un élément élastique tubulaire souple sensiblement circulaire (23), qui est reçu dans la poche (12) du second raccord de tuyau.

4. Dispositif terminal d'alimentation en air selon la revendication 3, **caractérisé en ce que** le second raccord de tuyau (1') présente un diamètre plus grand que celui du premier raccord de tuyau (1) et présente une forme de section de tuyau qui porte, au niveau de l'extrémité vers l'amont de celui-ci, des éléments d'étanchéité et est relié étroitement par l'intermédiaire des éléments d'étanchéité au premier raccord de tuyau autour de la circonférence de celui-ci, le second raccord de tuyau, au niveau de l'extrémité vers l'aval de celui-ci, présentant la poche (12) pour la partie d'extrémité bridée (11) du sac annexe (20') de celui-ci.
